# EUROPÄISCHE PATENTSCHRIFT

(11) **EP 4 220 530 B1**
(45) Veröffentlichungstag und Bekanntmachung des Hinweises auf die Patenterteilung: **14.10.2026**
(21) Anmeldenummer: 22207255.5
(22) Anmeldetag: 14.11.2022
(51) Int. Cl.: G06Q 50/02, G06Q 10/06, G06V 20/58, G06V 10/82, A01B 79/00, G01S 7/41

(54) **VERFAHREN ZUR UNTERSTÜTZUNG EINER KLASSIFIKATION VON UMFELDDATEN EINER LANDWIRTSCHAFTLICHEN ARBEITSMASCHINE**
METHOD FOR SUPPORTING CLASSIFICATION OF ENVIRONMENTAL DATA OF AN AGRICULTURAL WORKING MACHINE
PROCÉDÉ D'AIDE À LA CLASSIFICATION DE DONNÉES D'ENVIRONNEMENT D'UNE MACHINE DE TRAVAIL AGRICOLE

(30) Priorität: 27.01.2022 DE 102022101904
(43) Veröffentlichungstag der Anmeldung: 02.08.2023
(73) Patentinhaber: CLAAS E-Systems GmbH, 49201 Dissen (DE)
(72) Erfinder: Redenius, Jannik, 32361 Pr. Oldendorf (DE); Bone, Sven, 49124 Georgsmarienhütte (DE); Töniges, Torben, 33602 Bielefeld (DE); Skiba, Andreas, 33647 Bielefeld (DE); Lücke, Andreas, 33184 Altenbeken (DE)
(74) Vertreter: CLAAS Gruppe

(56) Entgegenhaltungen:
- EP-A1- 3 299 995
- EP-A1- 3 832 341
- DE-A1- 102017 217 443
- US-A1- 2019 146 511

## Beschreibung

Die vorliegende Erfindung betrifft ein Verfahren zur Unterstützung einer Klassifikation von Umfelddaten einer landwirtschaftlichen Arbeitsmaschine gemäß Anspruch 1.

Landwirtschaftliche Arbeitsmaschinen wie Zugmaschinen, insbesondere Traktoren, aber auch Erntemaschinen wie Mähdrescher und Feldhäcksler werden zunehmend mit autonomen Fahrfunktionen ausgestattet. Zur Gewährleistung der Betriebssicherheit ist erforderlich, dass diese autonomen Fahrfunktionen weder die landwirtschaftliche Arbeitsmaschine noch deren Umgebung gefährden.

Eine defensive Fahrstrategie in der hoch automatisierten Bodenkultivierung würde vorsehen, bei jeder erkannten Anomalie im Umfeld der landwirtschaftlichen Arbeitsmaschine in einen sicheren Zustand, beispielsweise einen Stillstand der landwirtschaftlichen Arbeitsmaschine, überzugehen. Dies ergäbe hohe Ausfallzeiten und die Notwendigkeit vieler manueller Eingriffe.

Um autonome Arbeitsmaschinen sicher betreiben zu können, sollten diese in der Lage sein, ihre Umgebung unter allen Umweltbedingungen wie Sonne, Regen, Nebel, usw. und in allen relevanten Situationen zu erfassen und so die Maschine sicher zu steuern. Auch bei nicht völlig autonomen Arbeitsmaschinen ist eine möglichst gute Benutzerunterstützung durch eine gute Umfelderkennung wünschenswert.

Grundsätzlich tauchen im Umfeld landwirtschaftlicher Arbeitsmaschinen immer wieder Anomalien auf. Manche, kritische, Anomalien erfordern eine Reaktion, während andere Anomalien unkritisch sind.

Für eine zuverlässige Klassifikation von kritischen und nicht kritischen Anomalien im Falle einer Detektion sind umfangreiche Trainingsdatensätze, insbesondere von Grenzfällen und relevanten Situationen, erforderlich. Die Aufnahme entsprechend großer und vielfältiger Datensätze wäre jedoch in Testversuchen extrem zeitaufwändig.

Es ist dabei eine Herausforderung, den bekannten Stand der Technik zu verbessern.

Der Erfindung liegt das Problem zugrunde, bekannte Verfahren zur Klassifikation von Anomalien derart auszugestalten und weiterzubilden, dass hinsichtlich der genannten Herausforderung eine weitere Optimierung erreicht wird.

Das obige Problem wird durch die Merkmale von Anspruch 1 gelöst.

Wesentlich ist die grundsätzliche Überlegung, dass zur Erzeugung eines Klassifikationsalgorithmus, der robust und zuverlässig in einer Vielzahl an Umweltbedingungen funktioniert, eine große Datenbasis notwendig ist. Es wäre zwar möglich, alle Umweltdaten vieler landwirtschaftlicher Arbeitsmaschinen aufzuzeichnen, dies würde allerdings zu Problemen beim Transfer der großen Datenmengen über das Internet führen. Außerdem müssten diese Datenmengen manuell oder mittels eines komplizierten und rechenintensiven Algorithmus gesichtet werden, um wenige Zeitabschnitte zu identifizieren, in denen Anomalien vorliegen.

Es wurde nun erkannt, dass auch mittels einer vereinfachten Analyseroutine potenzielle Anomalien bereits auf der landwirtschaftlichen Arbeitsmaschine erkannt werden können. Umfelddaten, die den Zeiträumen des Auftretens der Anomalien zugeordnet sind, werden dann gesammelt und zur Erzeugung eines verbesserten Klassifizierungsalgorithmus verwendet. Insbesondere können die gesammelten Daten zum Trainieren einer KI verwendet werden. Dieser Prozess kann iterativ sein, womit der Klassifizierungsalgorithmus über die Zeit verbessert werden kann, indem Zwischenstufen des Klassifizierungsalgorithmus in der Analyseroutine verwendet werden.

Dadurch, dass dieses Verfahren auch auf bereits im Markt befindlichen landwirtschaftlichen Arbeitsmaschinen zum Einsatz kommen kann, können mit nur geringem Aufwand sehr umfangreich Trainingsdaten gesammelt werden.

Interessant dabei ist, dass auch falsche Erkennungen von potenziellen Anomalien, also solchen, die keine Anomalien sind, Erkenntnisgewinne bringen können. Zusätzlich oder alternativ können diese Zeitabschnitte nachträglich aussortiert werden.

Im Einzelnen wird vorgeschlagen ein Verfahren zur Unterstützung einer Klassifikation von Umfelddaten einer landwirtschaftlichen Arbeitsmaschine, wobei eine lokale Steueranordnung der landwirtschaftlichen Arbeitsmaschine während eines Betriebs der landwirtschaftlichen Arbeitsmaschine, insbesondere kontinuierlich, Umfelddaten mittels einer Sensoranordnung der landwirtschaftlichen Arbeitsmaschine aufnimmt, wobei die Steueranordnung der landwirtschaftlichen Arbeitsmaschine in einer lokalen Analyseroutine Betriebsdaten der landwirtschaftlichen Arbeitsmaschine und/oder die Umfelddaten analysiert, um potenzielle Anomalien, umfassend kritische und unkritische Anomalien, zu detektieren, wobei die Steueranordnung der landwirtschaftlichen Arbeitsmaschine einem Auftreten der potenziellen Anomalien zugeordnete Zeitabschnitte der Umfelddaten an eine der landwirtschaftlichen Arbeitsmaschine ferne Servereinheit sendet, wobei die potenziellen Anomalien der an die Servereinheit gesendeten Zeitabschnitte in einem Anotationsschritt, insbesondere manuell, in kritische und unkritische Anomalien klassifiziert werden und wobei basierend auf der Klassifizierung ein, insbesondere Kl-basierter, Klassifizierungsalgorithmus zur Verwendung auf einer landwirtschaftlichen Arbeitsmaschine erzeugt wird.

Anspruch 2 betrifft die Möglichkeit, den erzeugten Klassifizierungsalgorithmus auf einer landwirtschaftlichen Arbeitsmaschine zum Einsatz zu bringen.

Bevorzugte Sensoren der Sensoranordnung sind Gegenstand von Anspruch 3.

Es gibt diverse Möglichkeiten, wie potenzielle Anomalien erkannt werden können. Diese sind Gegenstand von Anspruch 4. Beispielsweise können Reaktionen eines Benutzers verfolgt werden, um bei ungewöhnlichen Reaktionen eine potenzielle Anomalie zu erkennen.

Die Reaktionen des Benutzers können auch verwendet werden, um den Klassifizierungsalgorithmus weiterzubilden und mit Reaktionen zu versehen, die eine weitere landwirtschaftliche Arbeitsmaschine im Betrieb aggregiert nachbilden kann, um auf kritische Anomalien zu reagieren. Diese Ausgestaltung ist Gegenstand von Anspruch 5.

Im Folgenden wird die Erfindung anhand einer lediglich ein Ausführungsbeispiel darstellenden Zeichnung näher erläutert. In der Zeichnung zeigt
- Fig. 1: das vorschlagsgemäße Verfahren auf Seiten der landwirtschaftlichen Arbeitsmaschine und

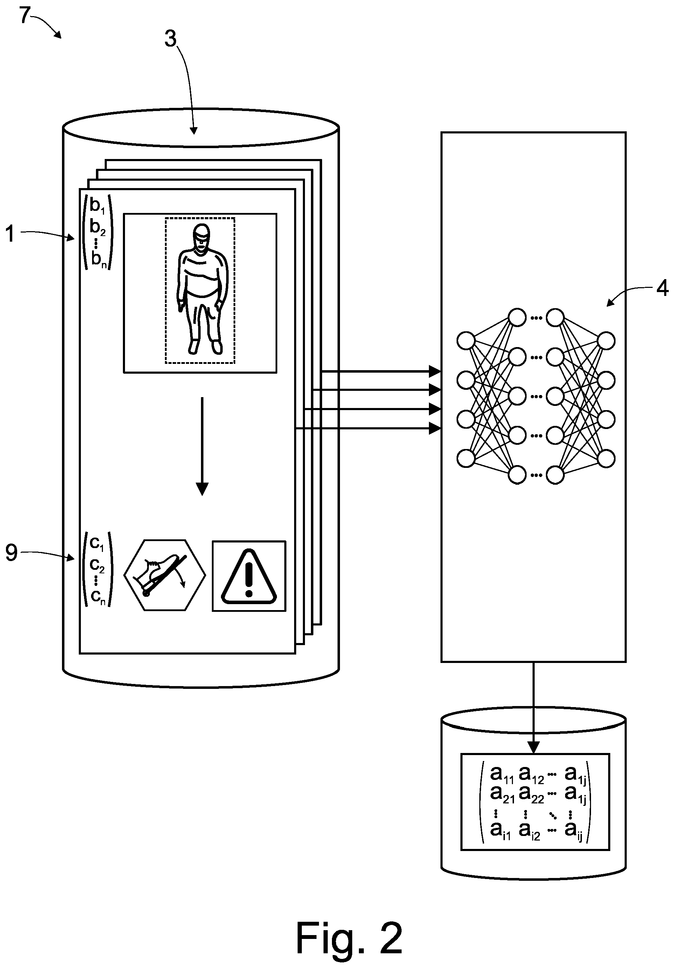

- Fig. 2: das vorschlagsgemäße Verfahren auf Seiten der Servereinheit

Das in den Figuren dargestellte und insoweit bevorzugte Ausführungsbeispiel betrifft ein Verfahren zur Unterstützung einer Klassifikation von Umfelddaten 1 einer landwirtschaftlichen Arbeitsmaschine 2. Vorzugsweise kann das Verfahren zur Erzeugung eines Trainingsdatensatzes 3 für eine künstliche Intelligenz, beispielsweise ein neuronales Netzwerk 4, genutzt werden. Die Verwendung derartiger Trainingsdatensätze 3 ist bekannt. Das Verfahren kann weiter genutzt werden, um auf Basis des Trainingsdatensatzes 3 eine KI zu trainieren und auf einer landwirtschaftlichen Arbeitsmaschine 2 zu verwenden.

Die landwirtschaftliche Arbeitsmaschine 2 weist eine lokale Steueranordnung 5 auf, die während eines Betriebs der landwirtschaftlichen Arbeitsmaschine 2, insbesondere kontinuierlich, Umfelddaten 1 mittels einer Sensoranordnung 6 der landwirtschaftlichen Arbeitsmaschine 2 aufnimmt.

Die lokale Steueranordnung 5 befindet sich auf der landwirtschaftlichen Arbeitsmaschine 2. Sie kann mit einer Cloud oder dergleichen in Verbindung stehen, überträgt die Umfelddaten 1 jedoch nicht durchgehend und vollständig von der landwirtschaftlichen Arbeitsmaschine 2 ins Internet, da dies eine hohe Bandbreite erfordern und belegen würde.

Bei dem Betrieb handelt es sich hier und vorzugsweise um eine Feldbearbeitung wie eine Aussaat, einen Spritzvorgang oder dergleichen. Die Umfelddaten 1 werden zumindest teilweise von der Sensoranordnung 6 aufgenommen und von der Steueranordnung 5 analysiert, hier und vorzugsweise auch unabhängig von dem vorschlagsgemäßen Verfahren. Sie dienen beispielsweise der Ansteuerung der landwirtschaftlichen Arbeitsmaschine 2. Ein Aufnehmen impliziert dabei nicht zwingend auch ein längerfristiges Speichern.

Zur Verbesserung zukünftiger Umfelddetektionen analysiert die Steueranordnung 5 der landwirtschaftlichen Arbeitsmaschine 2 in einer lokalen Analyseroutine Betriebsdaten der landwirtschaftlichen Arbeitsmaschine 2 und/oder die Umfelddaten 1, um potenzielle Anomalien, umfassend kritische und unkritische Anomalien, zu detektieren.

Bei kritischen Anomalien handelt es sich um solche Anomalien, die die landwirtschaftliche Arbeitsmaschine 2 schädigen können, bei denen die landwirtschaftliche Arbeitsmaschine 2 Personen oder Gegenstände schädigen könnte oder die aus anderen Gründen eine Reaktion erfordern. Unkritische Anomalien sind solche, die insbesondere von der Steueranordnung 5 aktuell von der Steueranordnung 5 als Anomalie erfasst werden, die jedoch allgemein keine relevante Gefahr begründen und/oder keine Reaktion erfordern. Die Unterscheidung von kritischen und unkritischen Anomalien und gegebenenfalls deren genauere Identifikation ist daher für einen teil-autonomen Betrieb einer landwirtschaftlichen Arbeitsmaschine 2 wichtig.

Daher sendet die Steueranordnung 5 der landwirtschaftlichen Arbeitsmaschine 2 einem Auftreten der potenziellen Anomalien zugeordnete Zeitabschnitte der Umfelddaten 1 an eine der landwirtschaftlichen Arbeitsmaschine 2 ferne Servereinheit 7. Die Servereinheit 7 ist der landwirtschaftlichen Arbeitsmaschine 2 nicht speziell zugeordnet und empfängt hier und vorzugsweise derartige Zeitabschnitte von einer Vielzahl landwirtschaftlicher Arbeitsmaschinen 2.

Die Zeitabschnitte können beispielsweise erzeugt werden, indem die Umfelddaten 1 in einem Ringspeicher gespeichert werden und periodisch überschrieben werden. Bei Detektion einer potenziellen Anomalie kann ein Zeitabschnitt vor und nach dieser potenziellen Anomalie anderweitig gespeichert werden. Der Zeitabschnitt kann beispielsweise zehn Sekunden vor und eine Minute nach der potenziellen Anomalie umfassen. Vorzugsweise umfasst ein Zeitabschnitt mindestens 5 Sekunden vor dem Auftreten der potenziellen Anomalie und/oder höchstens 30 Sekunden vor dem Auftreten der potenziellen Anomalie und/oder mindestens 10 Sekunden nach dem Auftreten der potenziellen Anomalie und/oder höchstens 5 Minuten nach dem Auftreten der potenziellen Anomalie.

Hier und vorzugsweise wird die Analyseroutine von einer Vielzahl landwirtschaftlicher Arbeitsmaschinen 2 separat voneinander durchgeführt. So können viele Daten in unterschiedlichen Umgebungen, bei unterschiedlichen Umgebungsbedingungen wie Licht, Temperatur, Feldbestand und dergleichen detektiert werden.

Die potenziellen Anomalien der an die Servereinheit 7 gesendeten Zeitabschnitte werden in einem Anotationsschritt, insbesondere manuell, in kritische und unkritische Anomalien klassifiziert. So entsteht mit wenig Aufwand ein guter Trainingsdatensatz 3 für eine KI oder die Entwicklung und/oder Validierung eines allgemeinen Klassifizierungsalgorithmus. Zusätzlich oder alternativ kann die Klassifizierung der Anomalien auch automatisch oder teil-automatisch erfolgen. Da die gesendeten Zeitabschnitte der Umfelddaten 1 unabhängig von der landwirtschaftlichen Arbeitsmaschine 2 vorliegen, können hierfür entsprechend mächtige Algorithmen verwendet werden, die sich nicht auf der landwirtschaftlichen Arbeitsmaschine 2 verwenden lassen.

Basierend auf der Klassifizierung wird ein, insbesondere Kl-basierter, Klassifizierungsalgorithmus zur Verwendung auf einer landwirtschaftlichen Arbeitsmaschine 2 erzeugt wird.

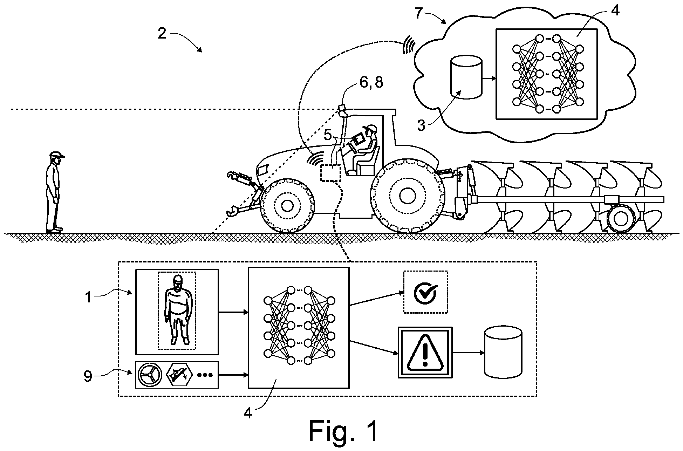

Fig. 1 zeigt sowohl die Anwendung eines bereits mittels des vorschlagsgemäßen Verfahrens erzeugten Klassifikationsalgorithmus als auch das Sammeln der hierfür benötigten Daten der Einfachheit halber an einer einzigen landwirtschaftlichen Arbeitsmaschine 2.

Beispiele für Anomalien sind Tiere, Fahrradfahrer, Personen, statische Hindernisse wie Pfähle, Strommasten, Bäume, Brunnen, Baumstümpfe, Wasserpumpen, Zäune, Windräder, Tiertränken, Futterstellen, Fahrzeuge, Steine, Jägersitze, Fahrräder, Schuttablagerungen im Feld und dergleichen.

Weiter ist hier und vorzugsweise vorgesehen, dass der Klassifizierungsalgorithmus auf einer weiteren landwirtschaftlichen Arbeitsmaschine 2 von einer lokalen Steueranordnung 5 der weiteren landwirtschaftlichen Arbeitsmaschine 2 verwendet wird, um mittels einer Sensoranordnung 6 aufgenommene Umfelddaten 1 zu analysieren, in den Umfelddaten 1 vorhandene Anomalien in kritische und unkritische Anomalien zu klassifizieren und vorzugsweise die weitere landwirtschaftliche Arbeitsmaschine 2 in Reaktion auf die Klassifikation anzusteuern. Fig. 1 zeigt im unteren Bereich schematisch, wie eine Anomalie in Form einer Person im Fahrtweg auf Basis von Bilddaten und einer Benutzerreaktion erkannt wird. Die Anomalie wird zusätzlich klassifiziert, wodurch die landwirtschaftliche Arbeitsmaschine 2 eine Reaktion einleiten kann. Außerdem wird ein entsprechender Zeitabschnitt an die Servereinheit 7 gesendet. Dieses Senden kann beispielsweise gesammelt am Ende eines Tages in einem WLAN erfolgen.

Vorzugsweise ist es dabei so, dass die Ansteuerung ein Anheben eines Anbaugerätes und/oder ein Anpassen einer Fahrgeschwindigkeit und/oder das Erzeugen eines Warnsignals und/oder ein Ausleuchten eines Umfeldes der weiteren landwirtschaftlichen Arbeitsmaschine 2 umfasst.

Zusätzlich oder alternativ kann eine Kollisionswarnung an den Benutzer oder einen Remote Operator ausgegeben und/oder eine weitere landwirtschaftliche Arbeitsmaschine 2 in einer Flotte informiert werden.

Weiter ist hier und vorzugsweise vorgesehen, dass die Sensoranordnung 6 als Umfeld-Sensor 8 eine Kamera und/oder einen Lidar-Sensor und/oder einen Radar-Sensor aufweist, dessen Messdaten Teil der Umfelddaten 1 sind, und/oder, dass die Umfelddaten 1 zusätzlich Online-Karten und/oder Offline-Karten umfassen.

Die genannten Umfeld-Sensoren 8 erzeugen dabei Daten, die als Teil der Umfelddaten 1 versendet werden. Zusätzlich kann Kartenmaterial mit versendet werden.

Ebenfalls kann vorgesehen sein, dass die Steueranordnung 5 der landwirtschaftlichen Arbeitsmaschine 2 eine potenzielle Anomalie bei Vorliegen eines vordefinierten Trigger-Ereignisses erkennt.

Ein Trigger-Ereignis kann eine explizite Benutzereingabe einer Anomalie und/oder eine Abweichung eines Maschinenparameters der landwirtschaftlichen Arbeitsmaschine 2 von einem Soll-Zustand und/oder einem erwarteten Zustand und/oder die Durchführung einer Notmaßnahme und/oder einer unerwarteten Maßnahme durch den Benutzer sein.

Die Maschinenparameter können eine Zugkraft, ein Antriebsmoment und dergleichen sein. Dabei wird vorzugsweise dann ein Trigger-Ereignis erkannt, wenn einer oder mehrere Maschinenparameter sich außerhalb eines üblichen und/oder spezifizierten Bereichs befinden oder anderweitig wesentlich abweichen.

Zusätzlich kann vorgesehen sein, dass Anomalien häufiger, insbesondere mit einer niedrigeren Schwelle bei der Detektion, erkannt werden, wenn widrige und/oder seltene Umweltbedingungen vorliegen, für die weitere Daten gesammelt werden sollen (z.B. Regen, tiefe Sonne, Nebel, Staub, Schnee). Alternativ oder zusätzlich kann die Güte einer vorhandenen Klassifikation der Steueranordnung 5 ermittelt werden und bei geringer Güte können häufiger Anomalien erkannt werden. Dabei ist zu beachten, dass diese Anomalien keine kritischen Anomalien sein müssen. Die unkritischen Anomalien können beispielsweise auch Störungen der Sensoren durch Schneefall sein. Eine Aufgabe des vorschlagsgemäßen Verfahrens ist, diese mittels des erzeugten Klassifizierungsalgorithmus besser zu unterscheiden.

Notmaßnahmen oder unerwartete Maßnahmen können abruptes Bremsen oder Lenken, Ausweichmanöver, Anheben des Anbaugerätes bei voller Fahrt, Reduzierung der Geschwindigkeit auf gerader Strecke, Anpassung untypischer Maschinenparameter, und dergleichen sein. Die explizite Benutzereingabe hingegen meint eine dedizierte Eingabe des Benutzers, dass eine Anomalie vorliegt.

Weiter ist hier und vorzugsweise vorgesehen, dass zusätzlich zu den Umfelddaten 1 den jeweiligen Zeitabschnitten zugeordnete Aktionen eines Benutzers 9 der landwirtschaftlichen Arbeitsmaschine 2 an die Servereinheit 7 gesendet werden, vorzugsweise, dass basierend auf den Aktionen der Klassifizierungsalgorithmus derart erstellt wird, dass den Anomalien Reaktionen zugeordnet werden, weiter vorzugsweise, dass die weitere landwirtschaftliche Arbeitsmaschine 2 basierend auf den zugeordneten Reaktionen angesteuert wird.

Somit wird es möglich, auch Reaktionen auf, insbesondere kritische, Anomalien vom Benutzer zu lernen.

### Bezugszeichenliste

- 1: Umfelddaten
- 2: landwirtschaftliche Arbeitsmaschine
- 3: Trainingsdatensatz
- 4: neuronales Netzwerk
- 5: Steueranordnung
- 6: Sensoranordnung
- 7: Servereinheit
- 8: Umfeld-Sensor
- 9: Aktionen eines Benutzers

## Patentansprüche

1. Verfahren zur Unterstützung einer Klassifikation von Umfelddaten (1) einer landwirtschaftlichen Arbeitsmaschine (2), wobei eine lokale Steueranordnung (5) der landwirtschaftlichen Arbeitsmaschine (2) während eines Betriebs der landwirtschaftlichen Arbeitsmaschine (2) kontinuierlich Umfelddaten (1) mittels einer Sensoranordnung (6) der landwirtschaftlichen Arbeitsmaschine (2) aufnimmt,
wobei die Steueranordnung (5) der landwirtschaftlichen Arbeitsmaschine (2) in einer lokalen Analyseroutine Betriebsdaten der landwirtschaftlichen Arbeitsmaschine (2) und/oder die Umfelddaten (1) analysiert, um potenzielle Anomalien, umfassend kritische und unkritische Anomalien, zu detektieren,
wobei die Steueranordnung (5) der landwirtschaftlichen Arbeitsmaschine (2) einem Auftreten der potenziellen Anomalien zugeordnete Zeitabschnitte der Umfelddaten (1) an eine der landwirtschaftlichen Arbeitsmaschine (2) ferne Servereinheit (7) sendet,
wobei die potenziellen Anomalien der an die Servereinheit (7) gesendeten Zeitabschnitte in einem Anotationsschritt, insbesondere manuell, in kritische und unkritische Anomalien klassifiziert werden und wobei basierend auf der Klassifizierung ein Kl-basierter Klassifizierungsalgorithmus zur Verwendung auf einer landwirtschaftlichen Arbeitsmaschine (2) erzeugt wird.

2. Verfahren nach Anspruch 1, **dadurch gekennzeichnet, dass** der Klassifizierungsalgorithmus auf einer weiteren landwirtschaftlichen Arbeitsmaschine (2) von einer lokalen Steueranordnung (5) der weiteren landwirtschaftlichen Arbeitsmaschine (2) verwendet wird, um mittels einer Sensoranordnung (6) aufgenommene Umfelddaten (1) zu analysieren, in den Umfelddaten (1) vorhandene Anomalien in kritische und unkritische Anomalien zu klassifizieren und die weitere landwirtschaftliche Arbeitsmaschine (2) in Reaktion auf die Klassifikation anzusteuern, wobei die Ansteuerung ein Anheben eines Anbaugerätes und/oder ein Anpassen einer Fahrgeschwindigkeit und/oder das Erzeugen eines Warnsignals und/oder ein Ausleuchten eines Umfeldes der weiteren landwirtschaftlichen Arbeitsmaschine (2) umfasst.

3. Verfahren nach Anspruch 1 oder 2, **dadurch gekennzeichnet, dass** die Sensoranordnung (6) als Umfeld-Sensor (8) eine Kamera und/oder einen Lidar-Sensor und/oder einen Radar-Sensor aufweist, dessen Messdaten Teil der Umfelddaten (1) sind, und/oder, dass die Umfelddaten (1) zusätzlich Online-Karten und/oder Offline-Karten umfassen.

4. Verfahren nach einem der vorhergehenden Ansprüche, **dadurch gekennzeichnet, dass** die Steueranordnung (5) der landwirtschaftlichen Arbeitsmaschine (2) eine potenzielle Anomalie bei Vorliegen eines vordefinierten Trigger-Ereignisses erkennt, wobei ein Trigger-Ereignis eine explizite Benutzereingabe einer Anomalie und/oder eine Abweichung eines Maschinenparameters der landwirtschaftlichen Arbeitsmaschine (2) von einem Soll-Zustand und/oder einem erwarteten Zustand und/oder die Durchführung einer Notmaßnahme und/oder einer unerwarteten Maßnahme durch den Benutzer ist.

5. Verfahren nach einem der vorhergehenden Ansprüche, **dadurch gekennzeichnet, dass** zusätzlich zu den Umfelddaten (1) den jeweiligen Zeitabschnitten zugeordnete Aktionen eines Benutzers (9) der landwirtschaftlichen Arbeitsmaschine (2) an die Servereinheit (7) gesendet werden, wobei basierend auf den Aktionen der Klassifizierungsalgorithmus derart erstellt wird, dass den Anomalien Reaktionen zugeordnet werden, wobei die weitere landwirtschaftliche Arbeitsmaschine (2) basierend auf den zugeordneten Reaktionen angesteuert wird.

## Claims

1. Method for supporting classification of environmental data (1) of an agricultural working machine (2), wherein a local control arrangement (5) of the agricultural working machine (2) continuously receives environmental data (1) by means of a sensor arrangement (6) of the agricultural working machine (2) during operation of the agricultural working machine (2), wherein the control arrangement (5) of the agricultural working machine (2) analyses operating data of the agricultural working machine (2) and/or the environmental data (1) in a local analysis routine in order to detect potential anomalies, comprising critical and non-critical anomalies,
wherein the control arrangement (5) of the agricultural working machine (2) sends time periods of the environmental data (1) which are associated with an occurrence of the potential anomalies to a server unit (7) remote from the agricultural working machine (2), wherein the potential anomalies of the time periods sent to the server unit (7) are, in particular manually, classified into critical and non-critical anomalies in an annotation step, and wherein an AI-based classification algorithm for use on an agricultural working machine (2) is generated based on the classification.

2. Method according to Claim 1, **characterized in that** the classification algorithm on a further agricultural working machine (2) is used by a local control arrangement (5) of the further agricultural working machine (2) in order to analyse environmental data (1) recorded by means of a sensor arrangement (6), to classify anomalies existing in the environmental data (1) into critical and non-critical anomalies, and to actuate the further agricultural working machine (2) in response to the classification, wherein the actuation comprises lifting an attachment and/or adjusting a speed of travel and/or generating a warning signal and/or illuminating an environment of the further agricultural working machine (2).

3. Method according to Claim 1 or 2, **characterized in that** the sensor arrangement (6) has a camera and/or a lidar sensor and/or a radar sensor as an environment sensor (8), the measurement data of which environment sensor forms part of the environmental data (1), and/or in that the environmental data (1) additionally comprises online maps and/or offline maps.

4. Method according to any of the preceding claims, **characterized in that** the control arrangement (5) of the agricultural working machine (2) identifies a potential anomaly when a predefined trigger event occurs, wherein a trigger event is an explicit user input of an anomaly and/or a deviation of a machine parameter of the agricultural working machine (2) from a target state and/or an expected state and/or the implementation of an emergency measure and/or an unexpected measure by the user.

5. Method according to any of the preceding claims, **characterized in that**, in addition to the environmental data (1), actions of a user (9) of the agricultural working machine (2) which are assigned to the respective time periods are sent to the server unit (7), wherein the classification algorithm is created based on the actions in such a way that reactions are assigned to the anomalies, wherein the further agricultural working machine (2) is actuated based on the assigned reactions.

## Revendications

1. Procédé d'aide à la classification de données environnementales (1) d'une machine de travail agricole (2), un ensemble de commande (5) local de la machine de travail agricole (2) enregistrant en continu des données environnementales (1) au moyen d'un ensemble capteur (6) de la machine de travail agricole (2) pendant le fonctionnement de la machine de travail agricole (2), l'ensemble de commande (5) de la machine de travail agricole (2) analysant des données de fonctionnement de la machine de travail agricole (2) et/ou les données environnementales (1) dans une routine d'analyse locale pour détecter des anomalies potentielles comprenant des anomalies critiques et non critiques,
l'ensemble de commande (5) de la machine de travail agricole (2) envoyant des laps de temps des données environnementales (1) associés à une occurrence des anomalies potentielles à une unité de serveur (7) éloignée de la machine de travail agricole (2),
les anomalies potentielles des laps de temps envoyés à l'unité de serveur (7) étant classées en anomalies critiques et non critiques dans une étape d'annotation, en particulier manuellement, et un algorithme de classification basé sur l'IA destiné à être utilisé sur une machine de travail agricole (2) étant généré sur la base de la classification.

2. Procédé selon la revendication 1, **caractérisé en ce que** l'algorithme de classification est utilisé sur une autre machine de travail agricole (2) par un ensemble de commande (5) local de l'autre machine de travail agricole (2) pour analyser des données environnementales (1) enregistrées au moyen d'un ensemble capteur (6), pour classer des anomalies présentes dans les données environnementales (1) en anomalies critiques et non critiques et piloter l'autre machine de travail agricole (2) en réponse à la classification, le pilotage comprenant un levage d'un accessoire et/ou une adaptation d'une vitesse de conduite et/ou la génération d'un signal d'avertissement et/ou un éclairage d'un environnement de l'autre machine de travail agricole (2).

3. Procédé selon la revendication 1 ou 2, **caractérisé en ce que** l'ensemble capteur (6) comporte en tant que capteur d'environnement (8) une caméra et/ou un capteur Lidar et/ou un capteur radar, dont les données de mesure font partie des données d'environnement (1) et/ou **en ce que** les données environnementales (1) comprennent en supplément des cartes en ligne et/ou des cartes hors ligne.

4. Procédé selon l'une des revendications précédentes, **caractérisé en ce que** l'ensemble de commande (5) de la machine de travail agricole (2) identifie une anomalie potentielle en présence d'un événement déclencheur prédéfini, un événement déclencheur étant une entrée utilisateur explicite d'une anomalie et/ou un écart d'un paramètre de machine de la machine de travail agricole (2) par rapport à un état de consigne et/ou un état attendu et/ou la mise en œuvre d'une mesure d'urgence et/ou d'une mesure inattendue par l'utilisateur.

5. Procédé selon l'une des revendications précédentes, **caractérisé en ce qu'**en plus des données environnementales (1), des actions d'un utilisateur (9) de la machine de travail agricole (2) associées aux laps de temps respectifs sont envoyées à l'unité de serveur (7), l'algorithme de classification étant créé sur la base des actions de telle manière que des réactions sont associées aux anomalies, l'autre machine de travail agricole (2) étant pilotée sur la base des réactions associées.
